(19) Europäisches Patentamt
European Patent Office
Office européen des brevets

(11) EP 3 230 771 B1

(12) FASCICULE DE BREVET EUROPEEN

(45) Date de publication et mention
de la délivrance du brevet:
**26.01.2022 Bulletin 2022/04**

(21) Numéro de dépôt: **15805186.2**

(22) Date de dépôt: **07.12.2015**

(51) Classification Internationale des Brevets (IPC):
*G01V 3/08* (2006.01)   *G06F 3/046* (2006.01)
*G06F 3/0354* (2013.01)   *G06F 3/041* (2006.01)

(52) Classification Coopérative des Brevets (CPC):
**G06F 3/03545; G01V 3/08; G01V 3/081;
G06F 3/0416; G06F 3/046**

(86) Numéro de dépôt international:
**PCT/EP2015/078814**

(87) Numéro de publication internationale:
**WO 2016/091798 (16.06.2016 Gazette 2016/24)**

(54) **PROCÉDÉ DE LOCALISATION D'AU MOINS UN OBJET MAGNÉTIQUE MOBILE, ET SYSTÈME ASSOCIÉ**

VERFAHREN ZUR ORTUNG VON MINDESTENS EINEM BEWEGLICHEN MAGNETISCHEN OBJEKT UND ZUGEHÖRIGES SYSTEM

METHOD FOR LOCATING AT LEAST ONE MOVABLE MAGNETIC OBJECT AND ASSOCIATED SYSTEM

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **09.12.2014 FR 1462106**

(43) Date de publication de la demande:
**18.10.2017 Bulletin 2017/42**

(73) Titulaire: **Advanced Magnetic Interaction, AMI
38170 Seyssinet-Pariset (FR)**

(72) Inventeurs:
• **HAUTSON, Tristan
  38600 Fontaine (FR)**
• **ALOUI, Rabeb
  38600 Fontaine (FR)**

(74) Mandataire: **Dupont, Jean-Baptiste
GIE Innovation Competence Group
310 Avenue Berthelot
69372 Lyon Cedex 08 (FR)**

(56) Documents cités:
**FR-A1- 2 988 872      US-A- 5 831 873
US-A1- 2011 285 392**

**Description**

La présente invention porte sur un procédé de localisation d'au moins un objet magnétique mobile, et un système associé.

Il est connu des documents portant sur des procédés et dispositifs de localisation d'un objet magnétique, tel le document FR 2 988 862.

Le document FR 2 988 862 divulgue un procédé de localisation d'un objet magnétique a partir de mesures d'un réseau de magnétomètres tri-axes, ce réseau comportant N magnétomètres tri-axes reliés mécaniquement les uns aux autres sans aucun degré de liberté pour conserver une distance connue entre chacun de ces magnétomètres, dans lequel N est un nombre entier supérieur à cinq. Le réseau de magnétomètres est compris dans un dispositif comprenant une surface d'appui pour un support d'écriture tel une ou plusieurs feuilles, reliées ou non.

US 5 831 873 A (KOHNEN KIRK K [US] ET AL) 3 novembre 1998 décrit un procédé de localisation d'un objet magnétique mobile par rapport à un réseau de magnétomètres triaxiaux.

La localisation d'un objet magnétique peut être considéré comme sa position (coordonnées (x, y, z) dans un repère fixe par rapport au réseau de magnétomètres) et la valeur de son moment magnétique ((Mx, My, Mz) dans le même repère) représentatif de l'orientation de l'objet magnétique.

L'introduction d'un bais sur les mesures utilisées dans ce type de procédé rend la localisation imprécise, voire instable

Dans le cadre d'une utilisation mobile d'un tel dispositif de localisation, i.e. lorsque l'utilisateur bouge le dispositif de localisation supportant son support d'écriture, son orientation est modifiée, ce qui entraîne directement une rotation du champ magnétique terrestre, dans le repère mesuré par le réseau de magnétomètres, et par conséquent un biais de mesure sur l'ensemble des magnétomètres.

Le mouvement du dispositif de localisation dans un champ magnétique homogène rend donc quasiment impossible l'utilisation d'un tel dispositif de localisation.

L'utilisation d'un tel dispositif dans un système de numérisation d'une trace manuscrite pour lequel la précision de la localisation recherchée est inférieure à 1 mm, implique qu'une légère variation du champ magnétique terrestre dans le repère des magnétomètres, entraîne directement un écart de mesure supérieur à la précision recherchée.

Il est connu de l'état de l'art, de supprimer, au démarrage, le biais de mesure sur l'ensemble des capteurs, ou en l'absence de tout objet magnétique.

Un tel procédé ne permet pas de mouvement pendant la localisation d'un objet magnétique et ne résout donc pas la problématique mentionnée pour une utilisation mobile. Notamment, dans le cadre d'une application de numérisation d'écriture Il arrive fréquemment que l'utilisateur bouge le dispositif de localisation afin d'obtenir un angle d'écriture possible tout en se déplaçant et modifiant sa posture.

Il est également connu de placer un magnétomètre à une distance suffisante de l'objet magnétique mobile, de sorte que ce magnétomètre ne soit pas affecté par le champ magnétique généré par l'objet magnétique mobile. Le chant mesuré par ce magnétomètre distant sert à supprimer la composante magnétique induite par le champ terrestre.

Un tel procédé ne permet pas d'utiliser des dispositifs de petite taille, et ne se prête donc pas un dispositif utilisable en mobilité. En outre, ce procédé est très sensible aux erreurs de mesure de ce magnétomètre distant, notamment en cas de dysfonctionnement ou de perturbation magnétique autre que terrestre de ce dernier.

Un but de l'invention est de pallier ces problèmes.

Il est proposé, selon un aspect de l'invention, un procédé de localisation d'au moins un objet magnétique mobile par rapport à un réseau d'au moins N magnétomètres triaxiaux reliés entre-eux mécaniquement sans aucun degré de liberté pour conserver une position relative connue de ces magnétomètres, N étant un nombre entier au moins égal à 2 comprenant les étapes consistant à :

- charger les mesures des magnétomètres, à un instant courant;
- calculer une moyenne pondérée desdites mesures des magnétomètres représentant un champ magnétique terrestre moyen et un champ magnétique moyen dû au(x) objet(s) magnétique(s) mobile(s);
- soustraire ladite moyenne pondérée desdites mesures de chacune desdites mesures pour obtenir des mesures modifiées;
- charger lesdites mesures modifiées, ainsi qu'une localisation du ou des objets magnétiques mobiles à l'instant courant en entrée d'un filtrage de localisation du ou des objets magnétiques mobile;
- effectuer le filtrage de localisation comprenant les étapes consistant à :

  - calculer ladite moyenne pondérée d'estimations des données délivrées par lesdits magnétomètres;
  - soustraire ladite moyenne pondérée desdites estimations de chacune desdites données estimées; et
  - délivrer en sortie une localisation du ou des objets magnétiques mobile à un instant suivant.

Un tel procédé permet de pouvoir utiliser un tel dispositif de localisation magnétique tout en en se déplaçant et/ou modifiant l'orientation du dispositif.

De plus ce procédé permet de supprimer l'influence d'un champ homogène sur le dispositif, (le champ terrestre en étant un ) ainsi que de supprimer les sources de perturbation qui présentent un champ magnétique homogène sur l'ensemble des magnétomètres. La plupart des sources s'apparentent à un dipôle magnétique. Si la distance entre le dispositif et la source de perturbation est suffisamment importante, le champ magnétique perçu est un champ magnétique homogène qui est donc corrigé par le procédé.

Des sources connues de perturbation magnétiques peuvent être des moteurs à courant continu pour lesquels les champs magnétiques générés sont importants, par exemple supérieurs à 1 Gauss. Ainsi cette méthode permet également l'utilisation du dispositif dans un train ou un tram.

On entend par localisation, la détermination de la position et de l'orientation de l'objet magnétique mobile, par exemple en déterminant la position et le moment magnétique de l'objet magnétique avec une représentation cartésienne (composante selon trois axes orthogonaux). En variante, la détermination de la position et de l'orientation de l'objet magnétique mobile peut être effectuée en exprimant le moment magnétique dans un repère sphérique c'est-à-dire selon une norme et deux angles. Cette alternative peut permettre de fixer le moment magnétique de l'objet magnétique mobile et donc estimer uniquement sa position et deux angles en initialisant le moment magnétique à une valeur connue, l'avantage et de diminuer le nombre d'inconnues à estimer pour le filtre de localisation.

Dans un mode de mise en œuvre, ladite moyenne pondérée utilise des coefficients de pondération identiques pour chacun des N magnétomètres. Ce procédé offre l'avantage de nécessiter une puissance de calcul moins importante qu'en utilisant des pondérations différentes. En effet on s'affranchit de 3n multiplications (avec N le nombre de capteurs).

Selon un mode de mise en œuvre, ladite moyenne pondérée utilise des coefficients de pondération plus faibles pour P magnétomètres, parmi les N magnétomètres, les plus proches d'un objet magnétique mobile respectif, P étant un nombre entier inférieur à N.

Ainsi, on limite l'influence des P magnétomètres les plus perturbés, voire saturés, par les objets magnétiques mobiles sont ignorés.

Par exemple, s'il y a plusieurs objets magnétiques mobiles, on détermine, pour chaque magnétomètre du réseau, les distances entre le magnétomètre et chaque objet magnétique mobile, puis on classe les distances déterminées pour l'ensemble des magnétomètres et des objets magnétiques mobiles dans un ordre croissant, et on utilise des coefficients de corrélation plus faibles pour les P magnétomètres dont les distances classées sont les plus faibles.

Par exemple, ladite moyenne pondérée utilise des coefficients de pondération nuls pour lesdits P magnétomètres.

Ainsi, les P magnétomètres les plus perturbés, voire saturés, par les objets magnétiques mobiles sont ignorés.

Dans un mode de réalisation, ladite moyenne pondérée utilise des coefficients de pondération nuls sauf pour le magnétomètre, parmi les N magnétomètres, le plus éloigné du ou des objets magnétiques mobiles.

Ainsi, on prend pour moyenne du champ magnétique terrestre mesuré, le champ magnétique mesuré par magnétomètre le plus éloigné du ou des objets magnétiques mobiles, donc le moins perturbé par le ou les objets magnétiques mobiles.

Il est également proposé, selon un autre aspect de l'invention un système de localisation d'au moins un objet magnétique mobile comprenant:

- un réseau d'au moins magnétomètres triaxiaux reliés entre-eux mécaniquement sans aucun degré de liberté pour conserver une position relative connue de ces magnétomètres, N étant un nombre entier au moins égal à 2;
- une unité électronique de traitement adapté pour déterminer la localisation du ou des objets magnétiques mobiles à partir de mesures fournies par les magnétomètres du réseau et d'un filtre de localisation; ladite unité électronique de traitement comprenant:
- des moyens de chargement des mesures des magnétomètres, à un instant courant;
- des moyens de calcul d'une moyenne pondérée desdites mesures des magnétomètres représentant un champ magnétique terrestre moyen et un champ magnétique moyen dû au(x) objet(s) magnétique(s) mobile(s); et
- des moyens de calcul d'une soustraction de ladite moyenne pondérée desdites mesures de chacune desdites mesures pour obtenir des mesures modifiées;

le filtre de localisation comprenant :

- des moyens de chargement desdites mesures modifiées, ainsi que d'une localisation du ou des objets magnétiques mobiles à l'instant courant en entrée d'un filtrage de localisation de l'objet magnétique mobile;
- des moyens de calcul d'une moyenne pondérée d'estimations des données délivrées par lesdits magnétomètres;
- des moyens de calcul d'une soustraction de ladite moyenne pondérée desdites estimations de chacune desdites données estimées; et
- des moyens de délivrance en sortie d'une localisation du ou des objets magnétiques mobile à un instant suivant.

L'invention sera mieux comprise à l'étude de quelques modes de réalisation décrits à titre d'exemples nullement limitatifs et illustrés par les dessins annexés sur lesquels :

- les figures 1 et 2 illustrent schématiquement un dispositif de localisation selon l'état de la technique connu; et
- la figure 3 illustre schématiquement un procédé selon un aspect de l'invention.

Sur l'ensemble des figures, les éléments ayant des références identiques sont similaires.

Dans la présente description, les caractéristiques et fonctions bien connues de l'homme du métier ne sont pas décrites en détails.

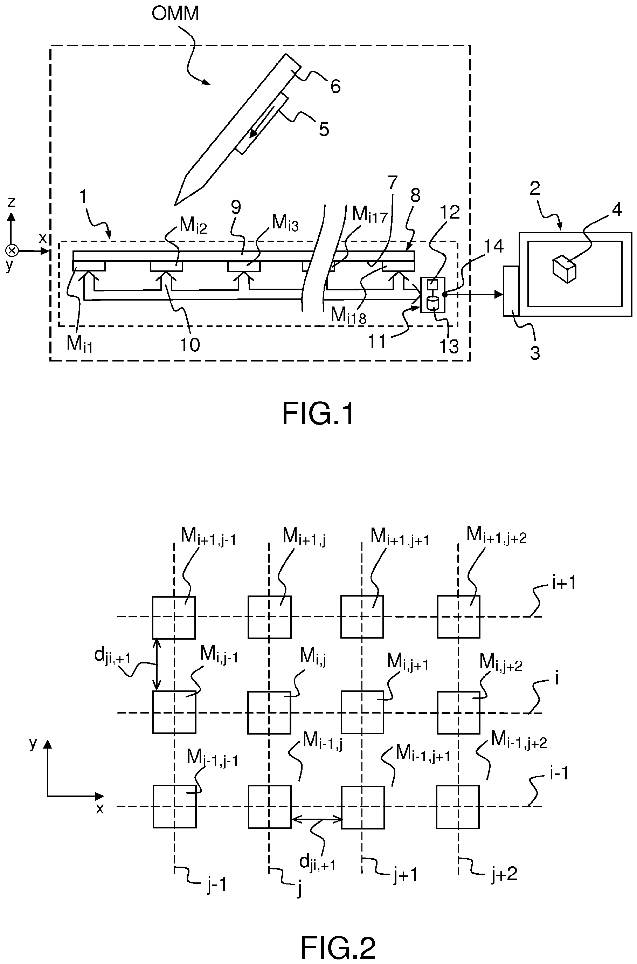

La figure 1 représente un dispositif de localisation 1 d'un objet magnétique mobile OMM selon l'état de l'art, par exemple décrit dans le document FR 2988862 A1.

Le dispositif de localisation 1, en l'espèce, commande un appareil électronique 2, par exemple un écran 2 raccordé à une unité de commande 3 capable de commander l'affichage d'une image sur cet écran 2.

Sur l'exemple représenté, l'unité 3 commande la position et l'orientation d'un curseur 4 sur l'écran 2. Par exemple, le curseur 4 a une forme tridimensionnelle, telle un parallélépipède rectangle.

Un objet magnétique mobile $OMM_k$ comprend un aimant permanent 5 présentant un moment magnétique non nul même en absence de champ magnétique extérieur et un ustensile 6 non magnétique. Par non magnétique, on entend un ustensile réalisé dans un matériau ne présentant aucune propriété magnétique mesurable. Par exemple, l'ustensile 6 est un crayon, un stylo ou un effaceur en bois ou en plastique. L'ustensile 6 peut être localisé à partir de la localisation de l'aimant permanent 5. L'ustensile 6 permet aussi de faciliter la manipulation de l'aimant permanent 5, notamment lorsque celui-ci est de petite taille. Typiquement, la combinaison de l'aimant permanent 5 et de l'ustensile 6 est librement déplaçable directement par la main d'un être humain dans un repère orthogonal XYZ fixé sans aucun degré de liberté au dispositif 1. En l'espèce, les directions X et Y sont horizontales (plan du support d'écriture) et la direction Z est verticale. A cet effet, cette combinaison pèse moins d'un kilo et, de préférence, moins de 200g. Les dimensions de cette combinaison sont suffisamment réduites pour pouvoir être saisie et déplacée par une seule main d'un utilisateur. Le ou les objets magnétiques mobiles $OMM_k$ sont librement déplaçables dans le repère orthogonal XYZ.

Par exemple, le champ magnétique coercitif d'un aimant est supérieur à 100 $A.m^{-1}$ ou 500 $A.m^{-1}$. Par exemple, il est réalisé en matériau ferro- ou ferrimagnétique. L'aimant permanent 5 a une forme oblongue. Sur la figure 1, la direction du moment magnétique de l'aimant permanent 5 est représentée par une flèche parallèle à la direction longitudinale de cet objet. En variante, l'aimant permanent 5 peut être en forme d'anneau entourant l'ustensile 6. La plus grande longueur de l'aimant permanent 5 est notée L par la suite.

La puissance de l'aimant permanent 5 est typiquement supérieure à 0,01 $A.m^2$ ou 0,1 $A.m^2$. Dans ce mode de réalisation, l'aimant permanent 5 est fixé sans aucun degré de liberté sur l'ustensile 6.

Le dispositif de localisation 1 permet de localiser l'aimant permanent 5 dans le repère XYZ. Par localisation, on entend ici la détermination de la position x, y, z de l'aimant permanent 5 dans le repère XYZ et aussi la détermination de l'orientation de l'aimant permanent 5 par rapport aux axes X, Y et Z du repère XYZ. Par exemple, l'orientation de l'aimant permanent 5 peut être représentée par les coordonnées cartésiennes $M_x$, $M_y$ et $M_z$, du moment magnétique de l'aimant permanent 5 dans le repère XYZ, ou par les coordonnées sphériques M, θ, φ du moment magnétique de l'aimant permanent 5 dans le repère XYZ, respectivement, par rapport aux axes X, Y et Z du repère.

Le dispositif de localisation 1 comporte un réseau de N magnétomètres tri-axes $M_{ij}$. Sur la figure 1, les traits ondulés verticaux indiquent qu'une partie du dispositif de localisation 1 n'a pas été représentée.

Typiquement, N peut être supérieur à cinq et, de préférence, supérieur à seize ou trente-deux, voire égal à soixante-quatre.

Dans ce mode de réalisation, les magnétomètres $M_{ij}$ sont alignés en lignes et en colonnes pour former une matrice ou réseau. En l'espèce, cette matrice comporte huit lignes et huit colonnes. Les indices i et j identifient, respectivement, la ligne et la colonne de cette matrice à l'intersection de laquelle se trouve le magnétomètre $M_{ij}$.

Sur la figure 1, seuls les magnétomètres $M_{i1}$, $M_{i2}$, $M_{i3}$, $M_{i4}$ et $M_{i8}$ d'une ligne i sont visibles. La position des magnétomètres $M_{ij}$ les uns par rapport aux autres est décrite plus en détail sur la figure 2.

Chaque magnétomètre $M_{ij}$ est fixé sans aucun degré de liberté aux autres magnétomètres. A cet effet, les magnétomètres $M_{ij}$ sont fixés sans aucun degré de liberté sur une face arrière 7 d'une plaque rigide 8. Cette plaque rigide 8 présente une face avant 9 tournée vers l'aimant permanent 5. La plaque 8 est réalisée dans un matériau non magnétique rigide. Par exemple, la plaque 8 peut être en verre.

Chaque magnétomètre $M_{ij}$ mesure la direction et l'intensité du champ magnétique généré par l'aimant permanent 5. Pour cela, chaque magnétomètre $M_{ij}$ mesure la norme de la projection orthogonale du champ magnétique généré par l'aimant permanent 5 au niveau de ce magnétomètre $M_{ij}$ sur trois axes de mesure de ce magnétomètre. En l'espèce, ces trois axes de mesure sont orthogonaux entre eux. Par exemple, les axes de mesure de chacun des magnétomètres $M_{ij}$ sont, respectivement, parallèles aux axes X, Y et Z du repère.

Chaque magnétomètre $M_{ij}$ est raccordé par l'intermédiaire d'un bus 10 de transmission d'informations à une unité de traitement 11.

L'unité de traitement 11 est capable de déterminer la position et l'orientation de l'aimant permanent 5 dans le repère XYZ à partir des mesures des magnéto-

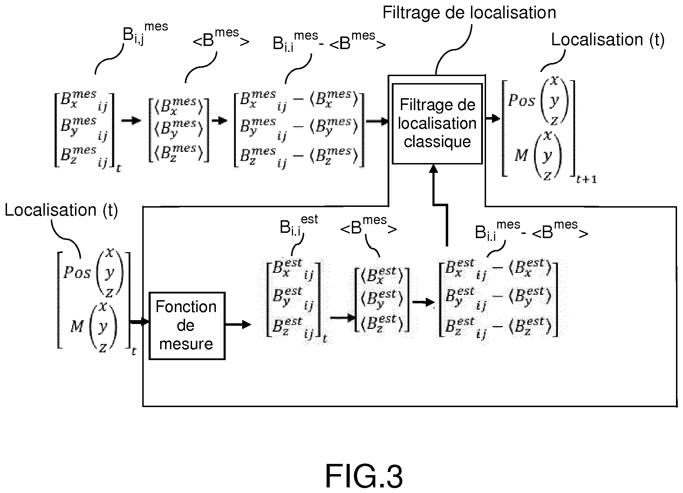

mètres M$_{ij}$. A cet effet, l'unité 11 comporte un calculateur électronique 12 programmable apte à exécuter des instructions enregistrées sur un support d'enregistrement d'informations. L'unité 11 comprend donc également une mémoire 13 contenant les instructions nécessaires pour l'exécution par le calculateur 12 du procédé de la figure 3.

En particulier, l'unité 11 implémente un modèle physico-mathématique associant des mesures de plusieurs magnétomètres M$_{ij}$ à des paramètres représentatifs de la position et de l'orientation de l'aimant permanent 5, i.e. également de l'ustensile 6, dans le repère XYZ.

Ce modèle est implémenté sous la forme d'un filtre d'estimation non linéaire, par exemple un filtre de Kalman étendu.

Ce modèle est typiquement construit a partir des équations physiques de magnétostatique. Pour construire ce modèle, l'aimant permanent 5 est approximé par un dipôle magnétique. Cette approximation n'introduit que très peu d'erreurs si la distance entre l'aimant permanent 5 et le magnétomètre M$_{ij}$ est supérieure à 2L et, de préférence, supérieure à 8L; L étant la plus grande dimension de l'aimant permanent 5. Typiquement, L est inférieur à 20 cm et, de préférence, inférieur à 10 ou 5cm.

L'unité 11 est également capable de restituer la position et l'orientation mesurée de l'aimant permanent 5 sur une interface 14.

L'unité de commande 3 est raccordée à l'unité 11 par l'intermédiaire de cette interface 14.

La figure 2 représente une partie des magnétomètres M$_{ij}$ du dispositif de localisation 1. Ces magnétomètres M$_{ij}$ sont alignés en lignes i parallèles à la direction X. Ces magnétomètres sont également alignés en colonnes j parallèles à la direction Y pour former une matrice ou réseau. Les lignes i et les colonnes j sont disposées dans l'ordre des indices croissants.

Le centre du magnétomètre M$_{ij}$ se trouve à l'intersection de la ligne i et de la colonne j. Le centre du magnétomètre correspond au point auquel le champ magnétique est mesuré par ce magnétomètre. En l'espèce, les indices i et j appartiennent à l'intervalle [1 ; 8].

Les centres de deux magnétomètres M$_{ij}$ et M$_{1,j+1}$ immédiatement consécutifs le long d'une ligne i sont séparés par une distance connue d$_{i,j,j+1}$. De façon similaire, le centre de deux magnétomètres M$_{ij}$ et M$_{i+1,j}$ immédiatement consécutifs le long d'une même colonne j sont séparés par une distance connue d$_{j,i,i+1}$.

Dans le cas particulier présentement décrit, quelle que soit la ligne i, la distance d$_{i,j,j+1}$ est la même. Cette distance est donc notée d$_j$. De façon similaire, quelle que soit la colonne j, la distance d$_{j,i,i+1}$ entre deux magnétomètres est la même. Cette distance est donc notée d$_i$. Sur l'exemple décrit, les distances d$_i$ et d$_j$ sont toutes les deux égales à d.

Typiquement, la distance d est comprise entre 1 et 4 cm lorsque 1

- la puissance de l'aimant permanent est de 0,5 A.m$^2$,
- la sensibilité des magnétomètres est de 4.10$^{-7}$T, et

- le nombre de magnétomètres M$_{ij}$ est de soixante-quatre.

La figure 3 illustre un mode de réalisation d'un procédé selon un aspect de l'invention. Les étapes du procédé sont mises en œuvre par des moyens de l'unité électronique de traitement 11.

A chaque étape de mesure, on calcule une moyenne pondérée <B$^{mes}$> desdites mesures B$_{i,j}$$^{mes}$ des magnétomètres M$_{i,j}$ respectifs représentant la somme d'un un champ magnétique terrestre moyen et d'un champ magnétique moyen dû au(x) objet(s) magnétique(s) mobile(s) OMM$_k$.

La moyenne pondérée <B$^{mes}$> peut être, de manière non limitative, la moyenne arithmétique pour laquelle les coefficients de pondération sont tous égaux.

Ainsi, le champ magnétique terrestre est supprimé en même temps que le champ magnétique moyen généré par le ou les objets magnétiques mobiles OMM$_k$.

La suppression du champ magnétique terrestre ou perturbations magnétique homogène sur le système constitue la correction recherchée tandis que la suppression de la moyenne du champ magnétique généré par la masse ferromagnétique constitue une erreur introduite.

On prend ensuite en compte l'erreur introduite pour ne pas dégrader la précision de l'algorithme de localisation.

On calcule donc la moyenne pondérée

$$<B^{mes}>=\begin{bmatrix}\langle B_x^{mes}\rangle\\\langle B_y^{mes}\rangle\\\langle B_z^{mes}\rangle\end{bmatrix}$$ des mesures

$$B_{i,j}^{mes}=\begin{bmatrix}B_x^{mes}{}_{ij}\\B_y^{mes}{}_{ij}\\B_z^{mes}{}_{ij}\end{bmatrix}_t$$ des magnétomètres M$_{i,j}$ représentant un champ magnétique terrestre moyen et un champ magnétique moyen dû au(x) objet(s) magnétique(s) mobile(s) OMM$_k$.

On soustrait ensuite, de chacune des mesures

$$B_{i,j}^{mes}=\begin{bmatrix}B_x^{mes}{}_{ij}\\B_y^{mes}{}_{ij}\\B_z^{mes}{}_{ij}\end{bmatrix}_t$$ , la moyenne pondérée

$$<B^{mes}>=\begin{bmatrix}\langle B_x^{mes}\rangle\\\langle B_y^{mes}\rangle\\\langle B_z^{mes}\rangle\end{bmatrix}$$ des mesures B$_{i,j}$$^{mes}$ , pour obtenir des mesures modifiées

$$B_{i,j}{}^{mes} - <B^{mes}> = \begin{bmatrix} B_x^{mes}{}_{ij} - \langle B_x^{mes}\rangle \\ B_y^{mes}{}_{ij} - \langle B_y^{mes}\rangle \\ B_z^{mes}{}_{ij} - \langle B_z^{mes}\rangle \end{bmatrix}.$$

Par exemple, dans le cas de la moyenne arithmétique comme moyenne pondérée, on a :

$$\begin{bmatrix} \langle B_x^{mes}\rangle \\ \langle B_y^{mes}\rangle \\ \langle B_z^{mes}\rangle \end{bmatrix} = \frac{1}{N} \Sigma_{i=1}^{a} \Sigma_{j=1}^{b} \begin{bmatrix} B_x^{mes}{}_{ij} \\ B_y^{mes}{}_{ij} \\ B_z^{mes}{}_{ij} \end{bmatrix}$$

avec axb=N

Un filtrage de localisation (FL) utilise ensuite en entrée les mesures modifiées

$$B_{i,j}{}^{mes} - <B^{mes}> = \begin{bmatrix} B_x^{mes}{}_{ij} - \langle B_x^{mes}\rangle \\ B_y^{mes}{}_{ij} - \langle B_y^{mes}\rangle \\ B_z^{mes}{}_{ij} - \langle B_z^{mes}\rangle \end{bmatrix}$$ et une localisation

$$(Pos_t, M_t) = \begin{bmatrix} Pos\begin{pmatrix}x\\y\\z\end{pmatrix} \\ M\begin{pmatrix}x\\y\\z\end{pmatrix} \end{bmatrix}_{t+1}$$ du ou des

objets magnétiques mobiles (OMM$_k$) à l'instant courant t.

Le filtrage de localisation utilise un calcul d'une

$$<B^{est}> = \begin{bmatrix} \langle B_x^{est}\rangle \\ \langle B_y^{est}\rangle \\ \langle B_z^{est}\rangle \end{bmatrix}$$

moyenne pondérée estimée

$$B_{i,j}{}^{est} = \begin{bmatrix} B_x^{est}{}_{ij} \\ B_y^{est}{}_{ij} \\ B_z^{est}{}_{ij} \end{bmatrix}_t$$

d'estimations des données délivrées par lesdits magnétomètres (M$_{ij}$). En l'espèce la moyenne pondérée utilisée doit être identique à celle utilisée pour la moyenne pondérée mesurée (i.e. mêmes coefficients de pondérations respectivement associées aux magnétomètres dans la pondération des mesures et dans la pondération des estimations, un coefficient de pondération est associé à un magnétomètre).

Les algorithmes d'estimation reposent sur l'utilisation d'un modèle de mesures qui lie position, orientation, moment magnétique de l'aimant avec le champ magnétique généré en tout point de l'espace.

Le calcul de la moyenne pondérée estimée, dans ce mode de réalisation, utilise la même moyenne pondérée, en l'espèce la moyenne arithmétique:

$$\begin{bmatrix} \langle B_x^{est}\rangle \\ \langle B_y^{est}\rangle \\ \langle B_z^{est}\rangle \end{bmatrix} = \frac{1}{N} \Sigma_{i=1}^{a} \Sigma_{j=1}^{b} \begin{bmatrix} B_x^{est}{}_{ij} \\ B_y^{est}{}_{ij} \\ B_z^{est}{}_{ij} \end{bmatrix}$$

avec axb=N

On soustrait ensuite ladite moyenne pondérée

$$<B^{est}> = \begin{bmatrix} \langle B_x^{est}\rangle \\ \langle B_y^{est}\rangle \\ \langle B_z^{est}\rangle \end{bmatrix}$$ de chacune desdites données estimées B$_{i,j}$$^{est}$.

Le filtre de localisation FL délivre ensuite en sortie une localisation

$$(Pos_{t+1}, M_{t+1}) = \begin{bmatrix} Pos\begin{pmatrix}x\\y\\z\end{pmatrix} \\ M\begin{pmatrix}x\\y\\z\end{pmatrix} \end{bmatrix}_{t+1}$$ du ou des objets

magnétiques mobile OMM$_k$ à un instant suivant t+1.

En variante, ladite moyenne pondérée utilise des coefficients de pondération plus faibles pour P magnétomètres, parmi les N magnétomètres M$_{i,j}$, les plus proches d'un objet magnétique mobile OMM$_k$ respectif, P étant un nombre entier inférieur à N. Bien entendu, la moyenne pondérée des mesures est toujours identique à la moyenne pondérée des estimations.

Ainsi, on limite l'influence des P magnétomètres les plus perturbés, voire saturés, par les objets magnétiques mobiles sont ignorés.

La moyenne pondérée peut même utiliser des coefficients de pondération nuls pour lesdits P magnétomètres, de manière à éliminer totalement l'influence des P magnétomètres les plus perturbés, voire saturés, par les objets magnétiques mobiles sont ignorés.

En variante, la moyenne pondérée peut utiliser des coefficients de pondération nuls sauf pour le magnétomètre, parmi les N magnétomètres, le plus éloigné du ou des objets magnétiques mobiles, pour prendre comme moyenne du champ magnétique terrestre, la mesure du magnétomètre le moins perturbé par le ou les objets magnétiques mobiles.

Dans ce mode de réalisation, la moyenne calculée correspond exactement à la mesure du magnétomètre.

Les étapes du procédé décrit ci-dessus peuvent être effectuées par un ou plusieurs processeurs programmables exécutant un programme informatique pour exécuter les fonctions de l'invention en opérant sur des données d'entrée et générant des données de sortie.

Un programme d'ordinateur peut être écrit dans n'importe quelle forme de langage de programmation, y compris les langages compilés ou interprétés, et le programme d'ordinateur peut être déployé dans n'importe quelle forme, y compris en tant que programme autonome ou comme un sous-programme, élément ou autre unité appropriée pour une utilisation dans un environnement informatique. Un programme d'ordinateur peut être déployée pour être exécuté sur un ordinateur ou sur plusieurs ordinateurs à un seul site ou répartis sur plusieurs sites et reliées entre elles par un réseau de communication.

**Revendications**

1. Procédé de localisation d'au moins un objet magnétique mobile ($OMM_k$) par rapport à un réseau d'au moins N magnétomètres triaxiaux ($M_{i,j}$) reliés entre-eux mécaniquement sans aucun degré de liberté pour conserver une position relative connue de ces magnétomètres ($M_{i,j}$), N étant un nombre entier au moins égal à 2, comprenant les étapes consistant à:

    - charger les mesures ($B_{i,j}{}^{mes}$) des magnétomètres ($M_{i,j}$), à un instant courant (t);
    - calculer une moyenne pondérée ($<B^{mes}>$) desdites mesures ($B_{i,j}{}^{mes}$) des magnétomètres ($M_{i,j}$) représentant un champ magnétique terrestre moyen et un champ magnétique moyen dû au(x) objet(s) magnétique(s) mobile(s) ($OMM_k$);
    - soustraire ladite moyenne pondérée ($<B^{mes}>$) de chacune desdites mesures ($B_{i,j}{}^{mes}$) pour obtenir des mesures modifiées ($B_{i,j}{}^{mes}-<B^{mes}>$);
    - charger lesdites mesures modifiées ($B_{i,j}{}^{mes}-<B^{mes}>$), ainsi qu'une localisation ($Pos_t$, $M_t$) du ou des objets magnétiques mobiles ($OMM_k$) à l'instant courant (t) en entrée d'un filtrage de localisation (FL) du ou des objets magnétiques mobile ($OMM_k$);
    - effectuer le filtrage de localisation (FL) comprenant les étapes consistant à:

        - calculer une moyenne pondérée ($<B^{est}>$) d'estimations ($B_{i,j}{}^{est}$) des données délivrées par lesdits magnétomètres ($M_i$);
        - soustraire ladite moyenne pondérée ($<B^{est}>$) de chacune desdites données estimées ($B_{i,j}{}^{est}$); et
        - délivrer en sortie une localisation ($Pos_{t+1}$, $M_{t+1}$) du ou des objets magnétiques mobile ($OMM_k$) à un instant suivant (t+1).

2. Procédé selon la revendication 1, dans lequel ladite moyenne pondérée utilise des coefficients de pondération identiques pour chacun des N magnétomètres ($M_{i,j}$).

3. Procédé selon la revendication 1, dans lequel ladite moyenne pondérée utilise des coefficients de pondération plus faibles pour P magnétomètres, parmi les N magnétomètres ($M_{i,j}$), les plus proches du ou des objets magnétiques mobiles ($OMM_k$), P étant un nombre entier inférieur à N.

4. Procédé selon la revendication 3, dans lequel ladite moyenne pondérée utilise des coefficients de pondération nuls pour lesdits P magnétomètres.

5. Procédé selon la revendication 1, dans lequel ladite moyenne pondérée utilise des coefficients de pondération nuls sauf pour le magnétomètre, parmi les N magnétomètres ($M_{i,j}$), le plus éloigné du ou des objets magnétiques mobiles ($OMM_k$).

6. Système de localisation d'au moins un objet magnétique mobile ($OMM_k$) comprenant:

    - un réseau d'au moins N magnétomètres triaxiaux ($M_{i,j}$) reliés entre-eux mécaniquement sans aucun degré de liberté pour conserver une position relative connue de ces magnétomètres ($M_{i,j}$), N étant un nombre entier au moins égal à 2;
    - une unité électronique de traitement (11) adapté pour déterminer la localisation (Post, $M_t$) du ou des objets magnétiques mobiles ($OMM_k$) à partir de mesures ($B_i{}^{mes}$) fournies par les magnétomètres ($M_{i,j}$) du réseau et d'un filtre de localisation (FL);

    ladite unité électronique de traitement (11) comprenant:

    - des moyens de chargement des mesures ($B_{i,j}{}^{mes}$) des magnétomètres ($M_{i,j}$), à un instant courant (t);
    - des moyens de calcul d'une moyenne pondérée ($<B^{mes}>$) desdites mesures ($B_{i,j}{}^{mes}$) des magnétomètres ($M_{i,j}$) représentant un champ magnétique terrestre moyen et un champ magnétique moyen dû au(x) objet(s) magnétique(s) mobile(s) ($OMM_k$); et
    - des moyens de calcul d'une soustraction de ladite moyenne pondérée ($<B^{mes}>$) de chacune desdites mesures ($B_{i,j}{}^{mes}$) pour obtenir des mesures modifiées ($B_{i,j}{}^{mes}-<B^{mes}>$);

    le filtre de localisation (FL) comprenant :

    - des moyens de chargement desdites mesures modifiées ($B_{i,j}{}^{mes}-<B^{mes}>$), ainsi que d'une localisation ($Pos_t$, $M_t$) du ou des objets magnétiques mobiles ($OMM_k$) à l'instant courant (t) en entrée d'un filtrage de localisation (FL) de l'objet magnétique mobile (OMM);
    - des moyens de calcul d'une moyenne pondérée ($<B^{est}>$) d'estimations ($B_{i,j}{}^{est}$) des données délivrées par lesdits magnétomètres ($M_{i,j}$);
- des moyens de calcul d'une soustraction de ladite moyenne pondérée (<$B^{est}$>) de chacune desdites données estimées ($B_{i,j}^{est}$); et
- des moyens de délivrance en sortie d'une localisation ($Pos_{t+1}$, $M_{t+1}$) du ou des objets magnétiques mobile ($OMM_k$) à un instant suivant (t+1).

**Patentansprüche**

1. Verfahren zur Ortung mindestens eines beweglichen magnetischen Objekts ($OMM_k$) mit Bezug auf ein Netz mit mindestens N 3-Achsen-Magnetometern ($M_{i,j}$), die ohne Freiheitsgrad mechanisch miteinander verbunden sind, um eine bekannte relative Position dieser Magnetometer ($M_{i,j}$) zu wahren, wobei N eine ganze Zahl mindestens gleich 2 ist, beinhaltend die folgenden Schritte:

   - Laden der Messungen ($B_{i,j}^{mes}$) der Magnetometer ($M_{i,j}$) zu einem gegenwärtigen Zeitpunkt (t);
   - Berechnen eines gewichteten Mittelwerts (<$B^{mes}$>) der Messungen ($B_{i,j}^{mes}$) der Magnetometer ($M_{i,j}$), der ein mittleres Erdmagnetfeld und ein mittleres Magnetfeld, welches auf das bzw. die beweglichen magnetischen Objekte ($OMM_k$) zurückzuführen ist, darstellt;
   - Subtrahieren des gewichteten Mittelwerts (<$B^{mes}$>) von jeder der Messungen ($B_{i,j}^{mes}$), um modifizierte Messungen ($Bi,j^{mes}$-<$B^{mes}$>) zu erhalten;
   - Laden der modifizierten Messungen ($Bi,j^{mes}$-<$B^{mes}$>) sowie einer Ortung (Post, $M_t$) des oder der beweglichen magnetischen Objekte ($OMM_k$) zu dem gegenwärtigen Zeitpunkt (t) in den Eingang einer Filterung zur Ortung (FL) des oder der beweglichen magnetischen Objekte ($OMM_k$);
   - Durchführen der Ortungsfilterung (FL), beinhaltend die folgenden Schritte:

      - Berechnen eines gewichteten Mittelwerts (<$B^{est}$>) von Schätzungen ($B_{i,j}^{est}$) der Datenelemente, die von den Magnetometern (Mi) ausgegeben werden;
      - Subtrahieren des gewichteten Mittelwerts (<$B^{est}$>) von jedem der geschätzten Datenelemente ($B_{i,j}^{est}$); und
      - Ausgeben, am Ausgang, einer Ortung ($Pos_{t+1}$, $M_{t+1}$) des oder der beweglichen magnetischen Objekte ($OMM_k$) zu einem Folgezeitpunkt (t+1).

2. Verfahren nach Anspruch 1, wobei der gewichtete Mittelwert Gewichtungskoeffizienten verwendet, die für jedes der N Magnetometer ($M_{i,j}$) identisch sind.

3. Verfahren nach Anspruch 1, wobei der gewichtete Mittelwert Gewichtungskoeffizienten verwendet, die für P Magnetometer der N Magnetometer ($M_{i,j}$), die dem oder den beweglichen magnetischen Objekten ($OMM_k$) am nächsten sind, niedriger sind, wobei P eine ganze Zahl kleiner als N ist.

4. Verfahren nach Anspruch 3, wobei der gewichtete Mittelwert Gewichtungskoeffizienten verwendet, die für die P Magnetometer gleich null sind.

5. Verfahren nach Anspruch 1, wobei der gewichtete Mittelwert Gewichtungskoeffizienten gleich null verwendet, nicht jedoch für das Magnetometer der N Magnetometer ($M_{i,j}$), das von dem oder den beweglichen magnetischen Objekten ($OMM_k$) am weitesten entfernt ist.

6. System zur Ortung mindestens eines beweglichen magnetischen Objekts ($OMM_k$), das Folgendes beinhaltet:

   - ein Netz mit mindestens N 3-Achsen-Magnetometern ($M_{i,j}$), die ohne Freiheitsgrad mechanisch miteinander verbunden sind, um eine bekannte relative Position dieser Magnetometer ($M_{i,j}$) zu wahren, wobei N eine ganze Zahl mindestens gleich 2 ist;
   - eine elektronische Verarbeitungseinheit (11), die dazu angepasst ist, die Ortung (Post, Mt) des oder der beweglichen magnetischen Objekte ($OMM_k$) anhand von Messungen ($B_i^{mes}$), die von den Magnetometern ($M_{i,j}$) des Netzes geliefert werden, und eines Ortungsfilters (FL) zu bestimmen;
   wobei die elektronische Verarbeitungseinheit (11) Folgendes beinhaltet:

      - Mittel zum Laden der Messungen ($B_{i,j}^{mes}$) der Magnetometer ($M_{i,j}$) zu einem gegenwärtigen Zeitpunkt (t);
      - Mittel zum Berechnen eines gewichteten Mittelwerts (<Bmes>) der Messungen ($B_{i,j}^{mes}$) der Magnetometer ($M_{i,j}$), der ein mittleres Erdmagnetfeld und ein mittleres Magnetfeld, welches auf das bzw. die beweglichen magnetischen Objekte ($OMM_k$) zurückzuführen ist, darstellt; und
      - Mittel zum Berechnen einer Subtraktion des gewichteten Mittelwerts (<$B^{mes}$>) von jeder der Messungen ($B_{i,j}^{mes}$), um modifizierte Messungen ($Bi,j^{mes}$-<$B^{mes}$>) zu erhalten;
      wobei das Ortungsfilter (FL) Folgendes beinhaltet:

- Mittel zum Laden der modifizierten Messungen (Bi,j$^{mes}$-<B$^{mes}$>) sowie einer Ortung (Pos$_t$, $M_t$) des oder der beweglichen magnetischen Objekte (OMM$_k$) zu dem gegenwärtigen Zeitpunkt (t) in den Eingang einer Filterung zur Ortung (FL) des beweglichen magnetischen Objekts (OMM);

- Mittel zum Berechnen eines gewichteten Mittelwerts (<B$^{est}$>) von Schätzungen (B$_{i,j}$$^{est}$) der Datenelemente, die von den Magnetometern (M$_{i,j}$) ausgegeben werden;

- Mittel zum Berechnen einer Subtraktion des gewichteten Mittelwerts (<B$^{est}$>) von jedem der geschätzten Datenelemente (B$_{i,j}$$^{est}$); und

- Mittel zum Ausgeben, am Ausgang, einer Ortung (Pos$_{t+1}$, $M_{t+1}$) des oder der beweglichen magnetischen Objekte (OMM$_k$) zu einem Folgezeitpunkt (t+1).

**Claims**

1. Method for locating at least one movable magnetic object (OMM$_k$) with respect to an array of at least N triaxial magnetometers (M$_{i,j}$) that are mechanically connected to one another with no degree of freedom in order to preserve a known relative position of these magnetometers (M$_{i,j}$), N being an integer at least equal to 2, comprising steps consisting in:

- loading the measurements (B$_{i,j}$$^{mes}$) of the magnetometers (M$_{i,j}$), at a current time (t);
- calculating a weighted average (<B$^{mes}$>) of said measurements (B$_{i,j}$$^{mes}$) of the magnetometers (M$_{i,j}$) representing an average terrestrial magnetic field and an average magnetic field due to the movable magnetic object(s) (OMM$_k$);
- subtracting said weighted average (<B$^{mes}$>) from each of said measurements (B$_{i,j}$$^{mes}$) in order to obtain modified measurements (B$_{i,j}$$^{mes}$-<B$^{mes}$>);
- loading said modified measurements (B$_{i,j}$$^{mes}$-<B$^{mes}$>) and a location (Post, $M_t$) of the one or more movable magnetic objects (OMM$_k$) at the current time (t) as input into a filtering operation (FL) for locating the one or more movable magnetic objects (OMM$_k$);
- implementing the location filtering operation (FL), this comprising steps consisting in:

- calculating a weighted average (<B$^{est}$>) of estimations (B$_{i,j}$$^{est}$) of data delivered by said magnetometers (Mi);
- subtracting said weighted average (<B$^{est}$>) from each of said estimated data (B$_{i,j}$$^{est}$); and
- delivering as output a location (Pos$_{t+1}$, $M_{t+1}$) of the one or more movable magnetic objects (OMM$_k$) at a subsequent time (t+1).

2. Method according to Claim 1, wherein said weighted average uses weighting coefficients that are identical for each of the N magnetometers (M$_{i,j}$).

3. Method according to Claim 1, wherein said weighted average uses weighting coefficients that are lower for P magnetometers, among the N magnetometers (M$_{i,j}$), closest to the one or more movable magnetic objects (OMM$_k$), P being an integer lower than N.

4. Method according to Claim 3, wherein said weighted average uses zero weighting coefficients for said P magnetometers.

5. Method according to Claim 1, wherein said weighted average uses zero weighting coefficients except for the magnetometer, among the N magnetometers (M$_{i,j}$), furthest from the one or more movable magnetic objects (OMM$_k$).

6. System for locating at least one movable magnetic object (OMM$_k$) comprising:

- an array of at least N triaxial magnetometers (M$_{i,j}$) that are mechanically connected to one another with no degree of freedom in order to preserve a known relative position of these magnetometers (M$_{i,j}$), N being an integer at least equal to 2;
- an electronic processing unit (11) suitable for determining the location (Post, $M_t$) of the one or more movable magnetic objects (OMM$_k$) from measurements (B$_i$$^{mes}$) delivered by the magnetometers (M$_{i,j}$) of the array and a location filter (FL); said electronic processing unit (11) comprising:

- means for loading measurements (B$_{i,j}$$^{mes}$) of the magnetometers (M$_{i,j}$), at a current time (t);
- means for calculating a weighted average (<B$^{mes}$>) of said measurements (B$_{i,j}$$^{mes}$) of the magnetometers (M$_{i,j}$) representing an average terrestrial magnetic field and an average magnetic field due to the movable magnetic object(s) (OMM$_k$); and
- means for subtracting said weighted average (<B$^{mes}$>) from each of said measurements (B$_{i,j}$$^{mes}$) in order to obtain modified measurements (B$_{i,j}$$^{mes}$-<B$^{mes}$>);

the location filter (FL) comprising:

- means for loading said modified measurements ($B_{i,j}{}^{mes}$-$<B^{mes}>$) and a location ($Pos_t$, $M_t$) of the one or more movable magnetic objects ($OMM_k$) at the current time (t) as input into a filtering operation (FL) for locating the movable magnetic object (OMM);

- means for calculating a weighted average ($<B^{est}>$) of estimations ($B_{i,j}{}^{est}$) of data delivered by said magnetometers ($M_{i,j}$);

- means for subtracting said weighted average ($<B^{est}>$) from each of said estimated data ($B_{i,j}{}^{est}$); and

- means for delivering as output a location ($Pos_{t+1}$, $M_{t+1}$) of the one or more movable magnetic objects ($OMM_k$) at a subsequent time (t+1).

FIG.1

FIG.2

FIG.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2988862
- US 5831873 A, KOHNEN KIRK K
- FR 2988862 A1